# EUROPEAN PATENT APPLICATION

(11) **EP 4 814 707 A1**
(43) Date of publication of application: **30.09.2026**
(21) Application number: 26157910.6
(22) Date of filing: 11.02.2026
(51) Int. Cl.: G06F 8/72, G06F 11/3604, G06N 20/00

(54) **ANALYZE SOURCE CODE (FOR PROGRAMS ACCORDING TO THE MISRA STANDARD) GENERATED BY AN AI/LLM USING STATIC ANALYSIS AND GENERATE A VIOLATION REPORT TOGETHER WITH A CLASSIFICATION FOR EACH VIOLATION**

(30) Priority: 26.03.2025 JP 2025052008
(71) Applicant: Toyota Jidosha Kabushiki Kaisha, Toyota-shi, Aichi-ken 471-8571 (JP)
(72) Inventor: MOCHIMARU, Yuya, Tokyo, 103-0022 (JP); KOIDE, Suigen, Tokyo, 103-0022 (JP); YAMAUCHI, Shinsuke, Tokyo, 103-0022 (JP)
(74) Representative: D Young & Co LLP

(57) **Abstract**

A code correction device acquires an original code used in programming; analyzes the original code by using a static analysis tool, outputs a violation report indicating a violation which does not comply with a coding guideline and is included in the original code, uses a generative AI model, inputs the original code and the violation report into the generative AI model, and causes the generative AI model to generate a corrected code which is a code corrected to comply with the coding guideline.

## Description

### FIELD

The present disclosure relates to a code correction device, a code correction method, and a non-transitory recording medium.

### BACKGROUND

Patent Literature 1 (Japanese Unexamined Patent Publication (Kokai) No. 2018-84939) describes a technology for reducing the burden of correcting a source code.

The technology described in Patent Literature 1 does not use a generative AI model (large language model) for reducing the burden of correcting the source code. Therefore, the burden of correction may not be sufficiently reduced.

For example, in programming of an embedded system in vehicle development, coding in the C/C++ language is the mainstream, and it is required to comply with in-vehicle coding guidelines, such as the Motor Industry Software Reliability Association (MISRA) standards, for quality assurance. For example, MISRA provides detailed guidelines for improving the security, portability, and reliability of codes in development of embedded software in the automotive industry in particular. However, since the guidelines are very strict, manual code correction requires a tremendous amount of time, effort, man-hours, and cost.

A technology that can minimize the time, effort, man-hours, and cost required for code correction is desired.

### SUMMARY

In view of the above, an object of the present disclosure is to provide a code correction device, a code correction method, and a non-transitory recording medium that can minimize the time, effort, man-hours, and cost required for code correction.
(1) One aspect of the present disclosure is a code correction device including a processor configured to: acquire an original code used in programming; analyze the original code by using a static analysis tool and output a violation report indicating a violation which does not comply with a coding guideline and is included in the original code; and use a generative AI model, input the original code and the violation report into the generative AI model and cause the generative AI model to generate a corrected code which is a code corrected to comply with the coding guideline.
   "Generative AI model" is not limited to large language model (LLM) as conventionally mentioned and encompasses various generation technologies including non-text modal such as a multimodal model, an image generation model, a voice generation model, and the like. In other words, all generative models (e.g., a large language model, a multimodal model, an image generation model, and the like) having the capability to output a corrected code and the like based on input information are assumed to be included in the "generative AI model" in the present specification.
(2) In the code correction device according to the aspect (1), the processor may be configured to: add external information which is required for correcting the original code and is pre-stored in a database, to an input to the generative AI model; and cause the generative AI model to generate the corrected code by combining a search for the external information, by using a technology of information addition type generation means.
   The "information addition type generation means" corresponds to traditional RAG (Retrieval-Augmented Generation) technology and refers to a technology in general for assisting and enhancing generation of a corrected code and the like, by adding external information pre-stored in a database or the like, an external information search result, or information acquired by external API integration or the like to an input to the generative AI model. In other words, any technology for correcting a generated output by adding external information, such as automatic acquisition of external information, integration of contextual information or the like in addition to the RAG technology is assumed to be included in the "information addition type generation means" in the present specification.
(3) In the code correction device according to the aspect (1) or (2), the external information may include at least one of the coding guideline used for output of the violation report and a model answer collection of correction examples created by a code corrector.
(4) In the code correction device according to any one of the aspects (1) to (3), the processor may be configured to generate a violation evaluation result based on the violation report, and the processor may be configured to: analyze the corrected code generated by the generative AI model and output a post-correction violation report indicating a violation which does not comply with the coding guideline and is included in the corrected code; generate the violation evaluation result based on the violation report and the post-correction violation report; and input the corrected code and the post-correction violation report into the generative AI model and cause the generative AI model to generate a recorrected code which is a code recorrected to comply with the coding guideline when the violation evaluation result generated based on the violation report and the post-correction violation report is outside an acceptable range.
(5) In the code correction device according to any one of the aspects (1) to (4), a process performed by the processor may be repeated until the violation evaluation result is within the acceptable range.
(6) In the code correction device according to any one of the aspects (1) to (5), the generative AI model may include a first generative AI model which generates the corrected code by performing violation resolution in only one created file and a second generative AI model which generates the corrected code by performing violation resolution across a plurality of created files, and the processor may be configured to generate the corrected code by using the first generative AI model and the second generative AI model in combination.
(7) In the code correction device according to any one of the aspects (1) to (6), the processor may be configured to classify a violation indicated by the violation report into one of a plurality of types of violation, and the processor may be configured to: be able to apply different correction approaches depending on the type of violation; and cause the generative AI model to generate the corrected code by applying a correction approach corresponding to a classified type of violation.
(8) In the code correction device according to any one of the aspects (1) to (7), the processor may be configured to cause the generative AI model to generate the corrected code by proposing a refactoring when a violation indicated by the violation report is classified as an unused function violation.
(9) In the code correction device according to any one of the aspects (1) to (8), the processor may be configured to cause the generative AI model to generate the corrected code by proposing an explicit cast when a violation indicated by the violation report is classified as a type conversion violation.
(10) In the code correction device according to any one of the aspects (1) to (9), the processor may be configured to feed back a result of selection accepted by a user interface to the generative AI model as training data, by using the user interface having a function of displaying the corrected code generated by the generative AI model as a correction proposal and a function of accepting selection of at least one of a plurality of correction proposals.
(11) In the code correction device according to any one of the aspects (1) to (10), the processor may be configured to: template a pattern of a violation which occurs at a frequency equal to or greater than a threshold value based on the violation report; and input a generated template into the generative AI model and cause the generative AI model to generate the corrected code.
(12) In the code correction device according to any one of the aspects (1) to (11), at least one of information about a cause of a violation and information about a method for correcting a violation may be included in the template which is generated and input into the generative AI model.
(13) In the code correction device according to any one of the aspects (1) to (12), the processor may be configured to: input the original code and the corrected code into the generative AI model; cause the generative AI model to compare the original code with the corrected code; and cause the generative AI model to output a reason for correction which is a reason why the original code was corrected to the corrected code and a corrected line which is a line in which a correction was made to the original code and is included in the corrected code.
(14) In the code correction device according to any one of the aspects (1) to (13), the processor may be configured to cause the generative AI model to generate the corrected code including the reason for correction and the corrected line so that the reason for correction is written in the corrected line included in the corrected code when the corrected code generated by the generative AI model is displayed on a user interface.
(15) One aspect of the present disclosure is a code correction method including: acquiring an original code used in programming; analyzing the original code by using a static analysis tool and outputting a violation report indicating a violation which does not comply with a coding guideline and is included in the original code; and using a generative AI model, inputting the original code and the violation report into the generative AI model and causing the generative AI model to generate a corrected code which is a code corrected to comply with the coding guideline.
(16) One aspect of the present disclosure is a non-transitory recording medium having recorded thereon a computer program for causing a processor to perform a process including:
   acquiring an original code used in programming; analyzing the original code by using a static analysis tool and outputting a violation report indicating a violation which does not comply with a coding guideline and is included in the original code; and using a generative AI model, inputting the original code and the violation report into the generative AI model and causing the generative AI model to generate a corrected code which is a code corrected to comply with the coding guideline.

According to the present disclosure, the time, effort, man-hours, and cost required for code correction can be minimized.

### BRIEF DESCRIPTION OF DRAWINGS

FIG. 1 is a view showing an example of a code correction device 1 of a first embodiment.
FIG. 2 is a view showing an example in which the code correction device 1 shown in FIG. 1 can be used by a plurality of users UR and engineers ER1 and ER2.
FIG. 3 is a view for explaining an example of a corrected code and the like output by a generative AI model.
FIG. 4 is a view for explaining an example of a corrected code and the like output by the generative AI model.
FIG. 5 is a view for explaining an example of a process in which an evaluation result generation unit 3D generates a violation evaluation result, and the like.
FIG. 6 is a view showing an example of a process repeatedly performed by an analysis unit 3B and a generation unit 3C.
FIG. 7 is a view for explaining an effect acquired by repeating the process performed by the analysis unit 3B and the process using the generative AI model performed by the generation unit 3C.
FIG. 8 is a view for explaining an example of corrected lines included in a corrected code, and the like.
FIG. 9 is a view for explaining an example of a corrected code including a reason for correction and a corrected line, and the like.
FIG. 10 is a flowchart for explaining an example of a process performed by a processor 13 of the code correction device 1 of the first embodiment.

### DESCRIPTION OF EMBODIMENTS

The embodiments of the code correction device, the code correction method, and the non-transitory recording medium of the present disclosure will be described below with reference to the drawings.

### <First Embodiment>

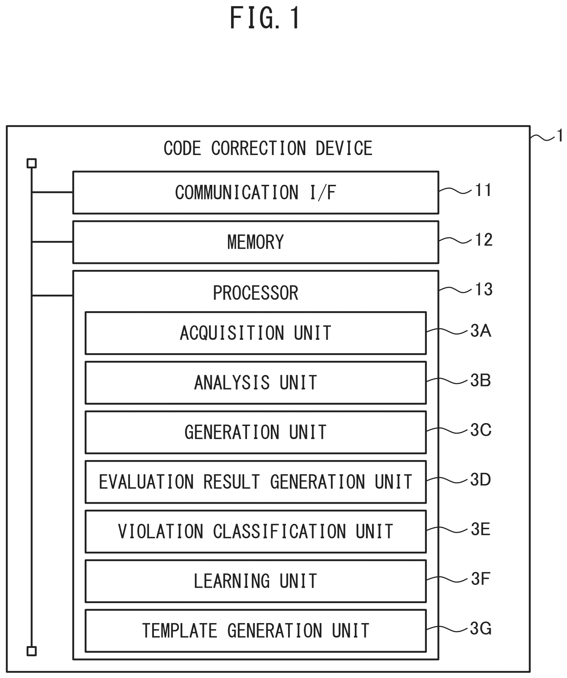

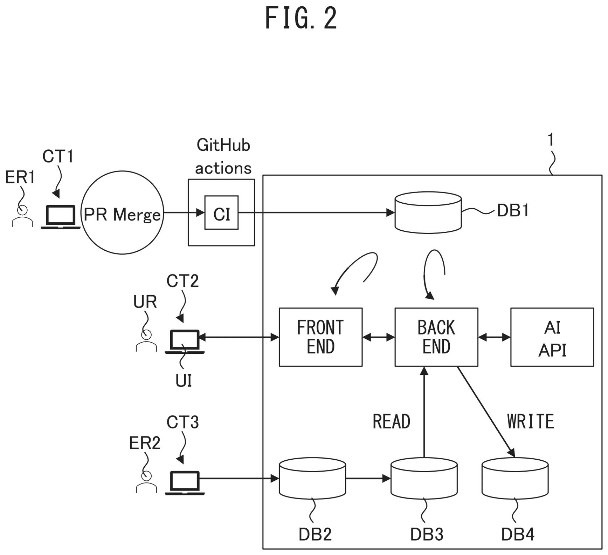

FIG. 1 is a view showing an example of a code correction device 1 of a first embodiment. FIG. 2 is a view showing an example in which the code correction device 1 shown in FIG. 1 can be used by a plurality of users UR and engineers ER1 and ER2.

In the examples shown in FIG. 1 and FIG. 2, the code correction device 1 is constituted by a microcomputer including a communication interface (I/F) 11, a memory 12, and a processor 13. The communication interface 11 includes an interface circuit for connecting the code correction device 1 to the outside of the code correction device 1 (e.g., a computer CT2 (see FIG. 2) used by the user UR (see FIG. 2) of the code correction device 1 and computers CT1 and CT3 (see FIG. 2) used by the engineers ER1 and ER2 (see FIG. 2) who develop the code correction device 1, and the like). The memory 12 stores a program used in a process performed by the processor 13 and various data. In the example shown in FIG. 2, databases DB1 to DB4 are included in the memory 12, and various data are recorded in the databases DB1 to DB4.

In the examples shown in FIG. 1 and FIG. 2, the processor 13 has the function as an acquisition unit 3A, the function as an analysis unit 3B, the function as a generation unit 3C, the function as an evaluation result generation unit 3D, the function as a violation classification unit 3E, the function as a learning unit 3F, and the function as a template generation unit 3G.

The acquisition unit 3A acquires an original code used in programming. Specifically, the acquisition unit 3A acquires the original code used in programming of an in-vehicle embedded system. For example, the original code acquired by the acquisition unit 3A includes C code, C++ code, Rust code, or the like.

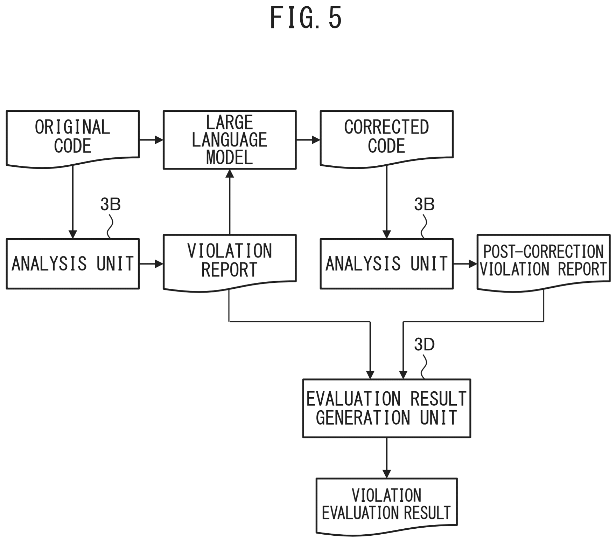

The analysis unit 3B analyzes the original code acquired by the acquisition unit 3A by using a static analysis tool. In other words, the original code (see FIG. 5) acquired by the acquisition unit 3A is input into the static analysis tool. For example, the static analysis tool used by the analysis unit 3B includes ccptest or a static analysis tool other than ccptest (e.g., Coverity, Fortify SCA, Sparrow SAST/SAQT, or the like). Furthermore, the analysis unit 3B outputs a violation report (see FIG. 5) indicating a violation which does not comply with a coding guideline and is included in the original code acquired by the acquisition unit 3A. For example, the coding guideline includes a coding convention such as MISRA (Motor Industry Software Reliability Association), AUTOSAR (AUTomotive Open System ARchitecture), or the like.

In the example shown in FIG. 2, a process for allowing the analysis unit 3B of the code correction device 1 to analyze the original code by using the static analysis tool is performed by the engineer ER1. Specifically, in the example shown in FIG. 2, the static analysis is performed in pull request (PR) merge and continuous integration (CI) using GitHub Actions. The result of the process performed by the engineer ER1, and the like are stored in the database DB1 and are distributed to the front end and the back end (API (application programming interface)).

In the examples shown in FIG. 1 and FIG. 2, the generation unit 3C performs various processes in which a generative AI model (e.g., large language model (LLM)) is used. Specifically, the generation unit 3C inputs the original code (see FIG. 5) acquired by the acquisition unit 3A and the violation report (see FIG. 5) output by the analysis unit 3B into the generative AI model (e.g., large language model (see FIG. 5)). Furthermore, the generation unit 3C causes the generative AI model to generate a corrected code (see FIG. 5) which is a code corrected to comply with the coding guideline. In other words, the generative AI model outputs the corrected code.

In the examples shown in FIG. 1 and FIG. 2, code correction is performed by the generative AI model, and therefore, the time, effort, man-hours, and cost required for code correction can be further minimized compared with a case in which code correction is performed manually.

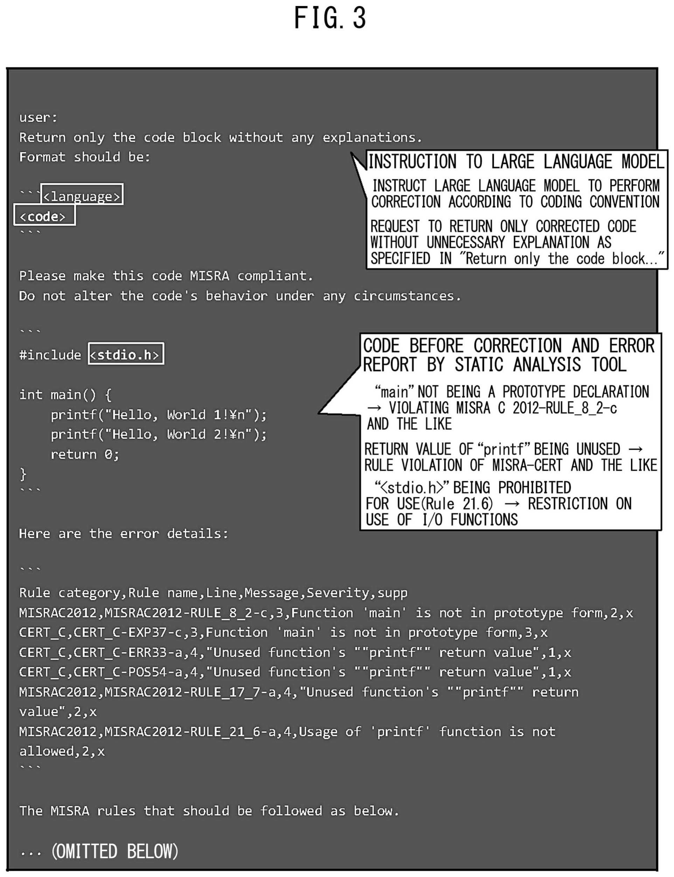

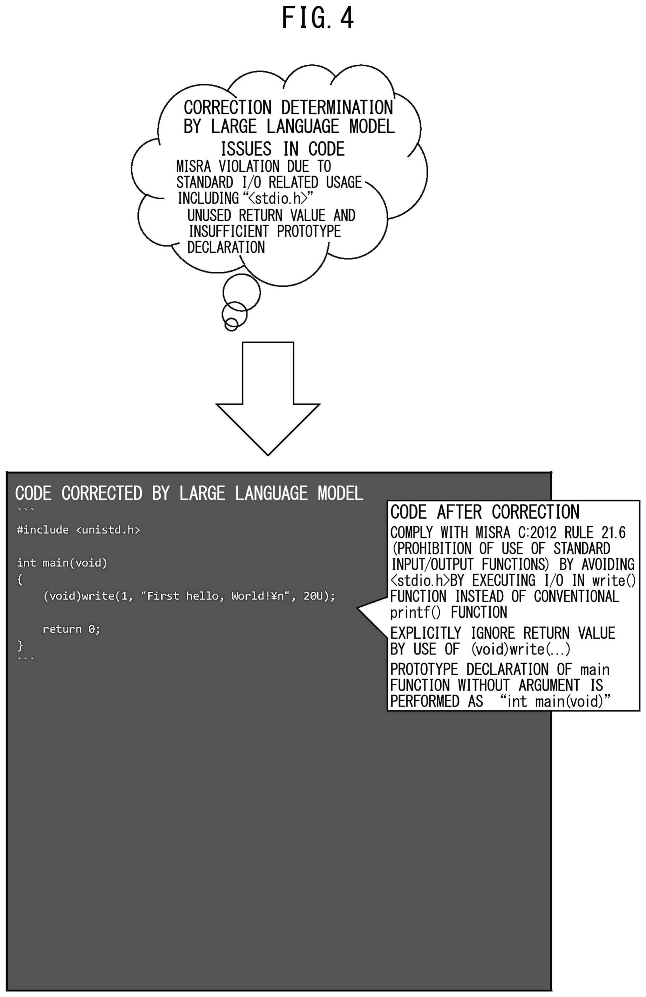

FIG. 3 and FIG. 4 are views for explaining examples of the corrected code and the like output by the generative AI model (e.g., large language model). Specifically, FIG. 3 shows an example of the original code before correction is performed by the generative AI model (large language model), and FIG. 4 shows an example of the corrected code which is the code after correction to the original code shown in FIG. 3 is performed by the generative AI model (large language model).

In the examples shown in FIG. 3 and FIG. 4, the user UR (see FIG. 2) of the code correction device 1 instructs the generative AI model (large language model) of the code correction device 1 to perform the correction according to the coding convention, as shown in FIG. 3. Specifically, the user UR (see FIG. 2) of the code correction device 1 requests the generative AI model (large language model) of the code correction device 1 to return only the corrected code without unnecessary explanation.

Further, in the examples shown in FIG. 3 and FIG. 4, the violation report (result of analysis of the original code performed by using the static analysis tool) output by the analysis unit 3B is input into the generative AI model (large language model), as shown in FIG. 3. The violation report includes: "main" not being a prototype declaration (violating MISRA C 2012-RULE_8_2-c and the like); return value of "printf" being unused (rule violation of MISRA-CERT and the like); and "<stdio.h>" being prohibited for use (Rule 21.6) (restriction on use of I/O functions).

In the examples shown in FIG. 3 and FIG. 4, the generative AI model (large language model) determines that MISRA violation due to standard I/O related usage including "<stdio.h>," unused return value and insufficient prototype declaration are issues in the original code, and corrects the code.

As shown in FIG. 4, the corrected code complies with MISRA C:2012 RULE 21.6 (prohibition of use of standard input/output functions) by avoiding <stdio.h> by executing I/O in write() function instead of the conventional printf() function. Further, the corrected code explicitly ignores the return value by the use of (void)write(...). Furthermore, in the corrected code, prototype declaration of the main function without argument is performed as "int main(void)."

In the examples shown in FIG. 1 and FIG. 2, the generation unit 3C adds external information which is required for correcting the original code and is pre-stored in the database DB3 (see FIG. 2) to an input into the generative AI model (e.g., large language model). The external information includes the coding guideline used by the analysis unit 3B for output of the violation report and a model answer collection of correction examples created by a code corrector (engineer ER2 (see FIG. 2)).

In another example, the external information may include only one of the coding guideline and the model answer collection of correction examples created by the code corrector.

In the example shown in FIG. 2, the engineer ER2 performs a process in which csv data of tacit knowledge of violation correction (model answer collection of correction examples) is recorded into the database DB2 of the code correction device 1 through the computer CT3. Furthermore, the tacit knowledge of violation correction (model answer collection of correction examples) in a data format readable by the generation unit 3C is stored into the database DB3.

In the examples shown in FIG. 1 and FIG. 2, the generation unit 3C causes the generative AI model (e.g., large language model (see FIG. 5)) to generate the corrected code (see FIG. 5) by combining a search for the external information by using a technology of information addition type generation means (e.g., RAG (retrieval-augmented generation)).

In the example shown in FIG. 2, for example, the corrected code generated by the generative AI model, or the like is stored into the database DB4 as an artifact.

As described above, in the examples shown in FIG. 1 and FIG. 2, the generation unit 3C adds the external information to the input into the generative AI model and causes the generative AI model to generate the corrected code by combining the search for the external information by using the technology of the information addition type generation means. Therefore, the code correction accuracy can be improved compared with a case in which combining the search for the external information by using the technology of the information addition type generation means is not performed.

On the other hand, the present inventors have found through diligent research that the generative AI model can generate the corrected code with high accuracy without combining the search for the external information by using the technology of the information addition type generation means. Therefore, in another example, the generation unit 3C may cause the generative AI model to generate the corrected code without using the technology of the information addition type generation means (i.e., without combining the search for the external information).

In the examples shown in FIG. 1 and FIG. 2, the evaluation result generation unit 3D generates a violation evaluation result based on the violation report output by the analysis unit 3B. Specifically, in the examples shown in FIG. 1 and FIG. 2, the evaluation result generation unit 3D generates a numerical value representing the violation evaluation result, such as "0.6" or "0.8," based on the violation report output by the analysis unit 3B.

In another example, the evaluation result generation unit 3D may generate the violation evaluation result represented by something other than the numerical value (e.g., character string such as "low", "medium", "high", or the like) based on the violation report output by the analysis unit 3B.

FIG. 5 is a view for explaining an example of a process in which the evaluation result generation unit 3D generates the violation evaluation result, and the like.

In the example shown in FIG. 5, the original code acquired by the acquisition unit 3A is input into the static analysis tool used by the analysis unit 3B. The analysis unit 3B outputs the violation report indicating the violation which does not comply with the coding guideline and is included in the original code. The original code acquired by the acquisition unit 3A and the violation report output by the analysis unit 3B are input into the generative AI model (e.g., large language model). The generative AI model (large language model) generates and outputs the corrected code.

The analysis unit 3B analyzes the corrected code generated by the generative AI model (large language model) and outputs a post-correction violation report indicating the violation which does not comply with the coding guideline and is included in the corrected code.

The violation report and the post-correction violation report that are output by the analysis unit 3B are input into the evaluation result generation unit 3D. The evaluation result generation unit 3D generates the violation evaluation result based on the violation report and the post-correction violation report.

In the examples shown in FIG. 1 and FIG. 2, when the violation evaluation result generated by the evaluation result generation unit 3D based on the violation report and the post-correction violation report is outside an acceptable range, the generation unit 3C inputs the corrected code and the post-correction violation report into the generative AI model and causes the generative AI model to generate a recorrected code which is a code recorrected to comply with the coding guideline. The process performed by the analysis unit 3B and the process using the generative AI model performed by the generation unit 3C are repeated until the violation evaluation result generated by the evaluation result generation unit 3D is within the acceptable range.

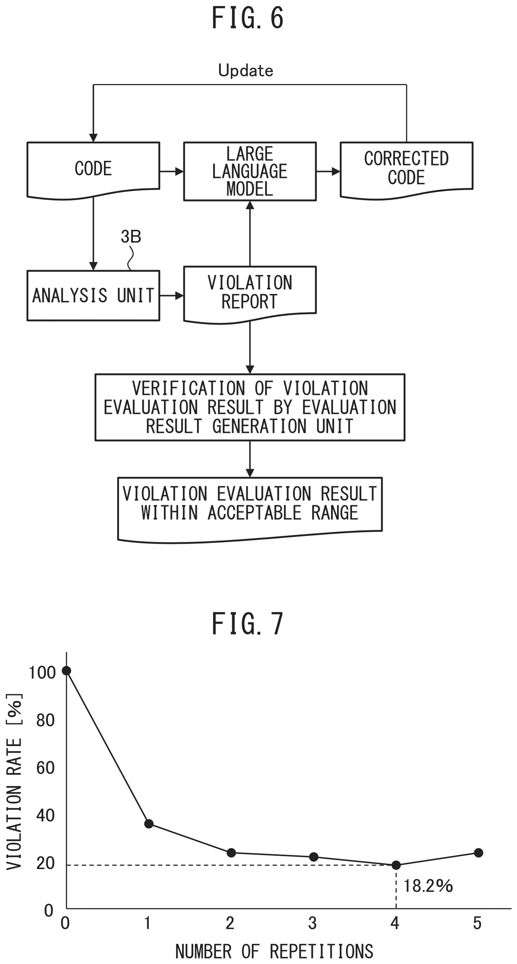

FIG. 6 is a view showing an example of the process repeatedly performed by the analysis unit 3B and the generation unit 3C.

In the example shown in FIG. 6, the evaluation result generation unit 3D verifies the violation evaluation result based on the violation report output by the analysis unit 3B this time and the violation report output by the analysis unit 3B the last time. The process performed by the analysis unit 3B and the process using the generative AI model (e.g., large language model) performed by the generation unit 3C are repeatedly performed until the violation evaluation result is within the acceptable range. When the evaluation result generation unit 3D verifies that the violation evaluation result is within the acceptable range, the violation evaluation result which is within the acceptable range is output, and the repetition of the process performed by the analysis unit 3B and the process using the generative AI model (large language model) performed by the generation unit 3C ends.

By repeatedly performing the process performed by the analysis unit 3B and the process using the generative AI model (large language model) performed by the generation unit 3C, the violation that cannot be corrected by the process using the generative AI model (large language model) performed once can be corrected.

FIG. 7 is a view for explaining an effect acquired by repeating the process performed by the analysis unit 3B and the process using the generative AI model performed by the generation unit 3C. In FIG. 7, the vertical axis represents the violation rate [%], and the horizontal axis represents the number of repetitions. Specifically, in the example shown in FIG. 7, the violation rate [%] represents the ratio of violations included in the corrected code generated by the generative AI model when the process performed by the analysis unit 3B and the process using the generative AI model performed by the generation unit 3C are repeated (i.e., when the number of repetitions is 1 to 5) to violations included in the corrected code generated by the generative AI model when the process performed by the analysis unit 3B and the process using the generative AI model performed by the generation unit 3C are not repeated (i.e., when the number of repetitions is zero).

As shown in FIG. 7, in the diligent research by the present inventors, the violation rate [%] was minimum (18.2%) when the number of repetitions of the process performed by the analysis unit 3B and the process using the generative AI model performed by the generation unit 3C was 4.

As shown in FIG. 7, by repeatedly performing the process performed by the analysis unit 3B and the process using the generative AI model performed by the generation unit 3C, violations included in the corrected code can be reduced to less than 50% of violations included in the corrected code generated by the generative AI model when the process performed by the analysis unit 3B and the process using the generative AI model performed by the generation unit 3C are not repeated.

As described above, in the examples shown in FIG. 1 and FIG. 2, the analysis unit 3B analyzes the corrected code generated by the generative AI model (e.g., large language model) and outputs the post-correction violation report indicating the violation which does not comply with the coding guideline and is included in the corrected code, the evaluation result generation unit 3D generates the violation evaluation result based on the violation report and the post-correction violation report, the generation unit 3C inputs the corrected code and the post-correction violation report into the generative AI model and causes the generative AI model to generate the recorrected code which is the code recorrected to comply with the coding guideline when the violation evaluation result generated by the evaluation result generation unit 3D based on the violation report and the post-correction violation report is outside the acceptable range, and the process performed by the analysis unit 3B and the process using the generative AI model performed by the generation unit 3C are repeated until the violation evaluation result generated by the evaluation result generation unit 3D is within the acceptable range.

On the other hand, the present inventors have found through the diligent research that the generative AI model can generate the corrected code with high accuracy even when the process performed by the analysis unit 3B and the process using the generative AI model performed by the generation unit 3C are not repeatedly performed. Therefore, in another example, the process performed by the analysis unit 3B and the process using the generative AI model performed by the generation unit 3C may not be repeatedly performed. In other words, the post-correction violation report may not be output by the analysis unit 3B.

In the examples shown in FIG. 1 and FIG. 2, the generation unit 3C generates the corrected code by using one generative AI model (e.g., large language model).

In another example, the generation unit 3C may generate the corrected code by using a plurality of generative AI models (e.g., large language models) in combination. The reason is that while some violations which do not comply with the coding guideline may be resolved with one file, some violations may require error resolution (violation resolution) across a plurality of files. In this example, the generation unit 3C generates the corrected code by using a first generative AI model which generates the corrected code by performing violation resolution in only one created file and a second generative AI model which generates the corrected code by performing violation resolution across a plurality of created files in combination. In other words, in this example, the first generative AI model serves as a violation resolution model based on one file, and the second generative AI model serves as a violation resolution model based on a plurality of files.

In the examples shown in FIG. 1 and FIG. 2, the violation classification unit 3E classifies the violation indicated by the violation report output by the analysis unit 3B into one of a plurality of types of violation. Specifically, the violation classification unit 3E classifies the violation indicated by the violation report output by the analysis unit 3B into unused function violation, type conversion violation, and the like.

The generation unit 3C can apply different correction approaches for each type of violation. The generation unit 3C causes the generative AI model (e.g., large language model) to generate the corrected code by applying a correction approach corresponding to a type of violation classified by the violation classification unit 3E.

Specifically, when the violation classification unit 3E classifies the violation indicated by the violation report output by the analysis unit 3B as the unused function violation, the generation unit 3C causes the generative AI model to generate the corrected code by proposing a refactoring.

When the violation classification unit 3E classifies the violation indicated by the violation report output by the analysis unit 3B as the type conversion violation, the generation unit 3C causes the generative AI model to generate the corrected code by proposing an explicit cast.

As described above, in the examples shown in FIG. 1 and FIG. 2, the violation classification unit 3E classifies the violation indicated by the violation report output by the analysis unit 3B into one of the plurality of types of violation, and the generation unit 3C causes the generative AI model to generate the corrected code by applying the correction approach corresponding to the type of violation classified by the violation classification unit 3E.

On the other hand, the present inventors have found through the diligent research that the generative AI model can generate the corrected code with high accuracy even when the different correction approaches are not applied for each type of violation indicated by the violation report output by the analysis unit 3B. Therefore, in another example, the different correction approaches may not be applied for each type of violation indicated by the violation report output by the analysis unit 3B. In other words, the code correction device 1 may not include the violation classification unit 3E.

In the examples shown in FIG. 1 and FIG. 2, a user interface UI (see FIG. 2) provided on the computer CT2 (see FIG. 2) used by the user UR (see FIG. 2) of the code correction device 1 has the function of displaying the corrected code generated by the generative AI model as a correction proposal (specifically, the function of displaying a plurality of correction proposals) and the function of accepting selection of at least one of a plurality of correction proposals by the user UR. By using the user interface UI provided on the computer CT2 used by the user UR, the learning unit 3F feeds back the result of the selection by the user UR of the code correction device 1 accepted by the user interface UI to the generative AI model as training data. Therefore, the code correction accuracy by the generative AI model can be continuously improved.

As described above, in the examples shown in FIG. 1 and FIG. 2, the learning unit 3F feeds back the result of the selection by the user UR to the generative AI model as the training data.

On the other hand, the present inventors have found through the diligent research that the generative AI model can generate the corrected code with high accuracy even when the result of the selection by the user UR is not fed back to the generative AI model as the training data. Therefore, in another example, the result of the selection by the user UR may not be fed back to the generative AI model as the training data. In other words, the code correction device 1 may not include the learning unit 3F.

In the examples shown in FIG. 1 and FIG. 2, the template generation unit 3G templates a pattern of the violation which occurs at a frequency equal to or greater than a threshold value based on the violation report output by the analysis unit 3B. The template generated by the template generation unit 3G includes information about a cause of the violation (human tacit knowledge) and information about a method for correcting the violation (human tacit knowledge).

In another example, the template generated by the template generation unit 3G may include only one of the information about the cause of the violation and the information about the method for correcting the violation.

In the examples shown in FIG. 1 and FIG. 2, the generation unit 3C inputs the template generated by the template generation unit 3G into the generative AI model and causes the generative AI model to generate the corrected code. In other words, the generative AI model generates the corrected code based on the information about the cause of the violation (human tacit knowledge) and the information about the method for correcting the violation (human tacit knowledge) that are included in the template. Therefore, the code correction accuracy of the generative AI model can be improved compared with a case in which the template generated by the template generation unit 3G is not input into the generative AI model.

As described above, in the examples shown in FIG. 1 and FIG. 2, the template generation unit 3G generates the template including the human tacit knowledge, and the generation unit 3C inputs the template into the generative AI model and causes the generative AI model to generate the corrected code.

On the other hand, the present inventors have found through the diligent research that the generative AI model can generate the corrected code with high accuracy even when the template including the human tacit knowledge is not input into the generative AI model. Therefore, in another example, the template including the human tacit knowledge may not be input into the generative AI model. In other words, the code correction device 1 may not include the template generation unit 3G.

In the examples shown in FIG. 1 and FIG. 2, the generation unit 3C inputs the original code acquired by the acquisition unit 3A and the corrected code generated by the generative AI model into the generative AI model and causes the generative AI model to compare the original code with the corrected code. Furthermore, the generation unit 3C causes the generative AI model to output a reason for correction which is a reason why the original code was corrected to the corrected cod and a corrected line which is a line in which a correction was made to the original code and is included in the corrected code.

Specifically, the generation unit 3C causes the generative AI model to generate the corrected code including the reason for correction and the corrected line (line in which the correction was made to the original code) so that the reason for correction is written in the corrected line included in the corrected code when the corrected code generated by the generative AI model is displayed on the user interface UI (see FIG. 2) on the computer CT2 (see FIG. 2) used by the user UR (see FIG. 2) of the code correction device 1.

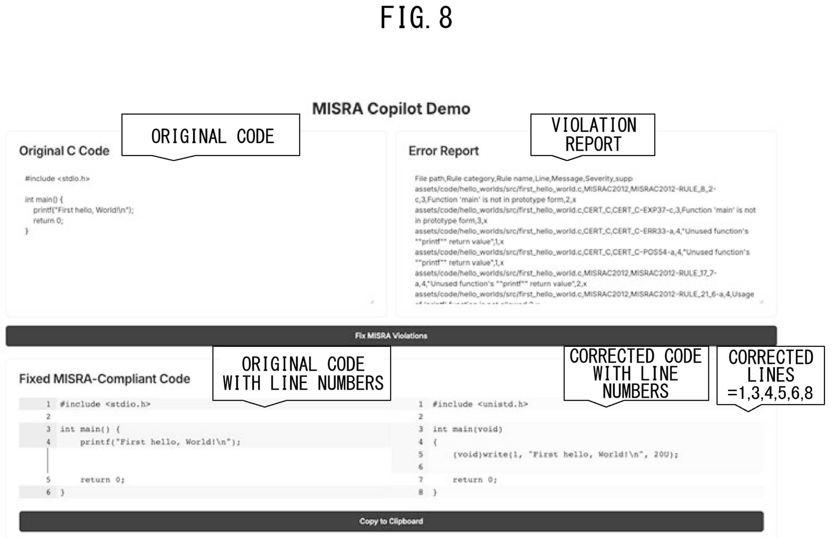

FIG. 8 is a view for explaining an example of corrected lines included in the corrected code, and the like. Specifically, the upper-left part of FIG. 8 shows the original code input into the generative AI model, the upper-right part of FIG. 8 shows the violation report (error report) generated by the analysis unit 3B which analyzed the original code shown in the upper-left part of FIG. 8, the lower-left part of FIG. 8 shows the original code with line numbers, and the lower-right part of FIG. 8 shows the corrected code with line numbers generated by the generative AI model.

In the example shown in FIG. 8, as can be seen by comparing the original code with line numbers shown in the lower-left part of FIG. 8 with the corrected code with line numbers shown in the lower-right part of FIG. 8, lines 1, 3, 4, 5, 6, and 8 of the corrected code with line numbers shown in the lower-right part of FIG. 8 correspond to the corrected lines (lines in which the correction was made to the original code).

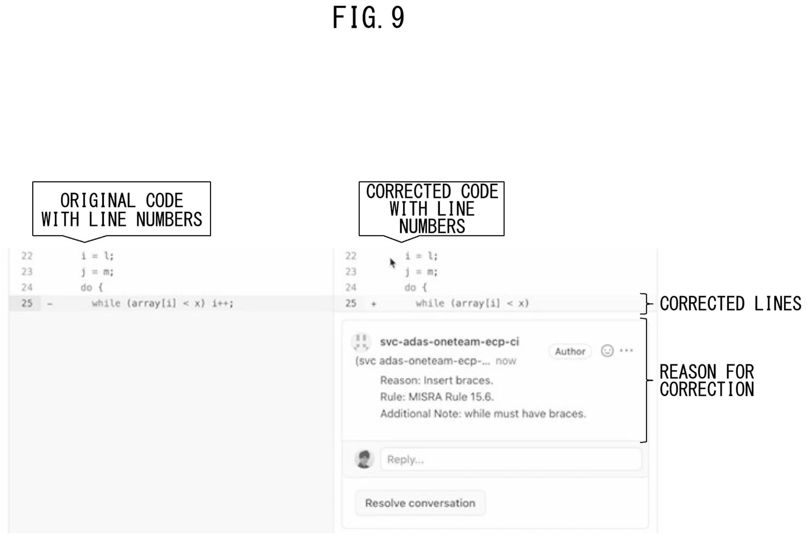

FIG. 9 is a view for explaining an example of the corrected code including the reason for correction and the corrected line, and the like. Specifically, the left side part of FIG. 9 shows a part of the original code (original code input into the generative AI model) with line numbers, and the right side part of FIG. 9 shows a part of the corrected code (corrected code generated by the generative AI model) with line numbers including the reason for correction and the corrected line.

In the example shown in FIG. 9, as can be seen by comparing the original code with line numbers shown in the left side part of FIG. 9 with the corrected code with line numbers shown in the right side part of FIG. 9, line 25 of the corrected code with line numbers shown in the right side part of FIG. 9 corresponds to the corrected line (line in which the correction was made to the original code).

Further, in the example shown in FIG. 9, as the reason (reason for correction) why the original code shown in the left side part of FIG. 9 was corrected to the corrected code shown in the right side part of FIG. 9, "Reason: Insert braces," "Rule: MISRA Rule 15.6," and "Additional Note: while must have braces" are generated by the generative AI model, and the reason for correction and the corrected line are displayed together on the user interface UI (see FIG. 2) on the computer CT2 (see FIG. 2) used by the user UR (see FIG. 2) of the code correction device 1.

Therefore, the user UR of the code correction device 1 can easily understand the reason why line 25 of the original code was corrected to line 25 of the corrected code. As a result, the user UR of the code correction device 1 can easily determine whether to adopt the corrected code generated by the generative AI model.

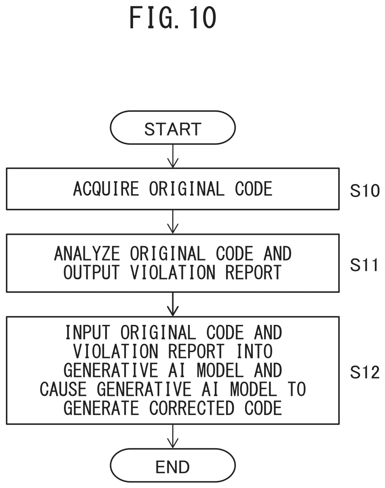

FIG. 10 is a flowchart for explaining an example of the process performed by the processor 13 of the code correction device 1 of the first embodiment.

In the example shown in FIG. 10, at step S10 the acquisition unit 3A acquires the original code used in programming.

At step S11, the analysis unit 3B analyzes the original code acquired at step S10 by using the static analysis tool and outputs the violation report indicating the violation which does not comply with the coding guideline and is included in the original code.

At step S12, the generation unit 3C uses the generative AI model (e.g., large language model), inputs the original code acquired at step S10 and the violation report output at step S11 into the generative AI model and causes the generative AI model to generate the corrected code which is the code corrected to comply with the coding guideline.

As described above, by using the code correction device 1 of the first embodiment, a part of the process for complying with the coding guideline can be automated and the development efficiency of in-vehicle software engineers can be improved. The security and reliability of the code can be improved by the generative AI model which detects a potential standard violation quickly and proposes a correction. Further, the necessity for the in-vehicle software engineers to memorize complex coding convention and the necessity for the in-vehicle software engineers to manually correct the error (violation) can be reduced. As a result, acceleration of development cycles and improvement in product quality can be simultaneously achieved.

### <Second Embodiment>

The code correction device 1 of a second embodiment is configured similarly to the code correction device 1 of the first embodiment described above except for a point described below.

As shown in FIG. 1 and FIG. 2, the code correction device 1 of the first embodiment is incorporated in the computer (e.g., server computer or the like) other than the computer CT2 (see FIG. 2) used by the user UR (see FIG. 2) of the code correction device 1. Therefore, for example, a plurality of users and engineers can access the computer in which the code correction device 1 is incorporated through a network and use the code correction device 1.

On the other hand, the code correction device 1 of the second embodiment is incorporated in the computer (not shown) used by the user of the code correction device 1.

### <Third Embodiment>

The code correction device 1 of a third embodiment is configured similarly to the code correction device 1 of the first embodiment described above except for a point described below.

As described above, the code correction device 1 of the first embodiment corrects the original code used in programming of the in-vehicle embedded system.

On the other hand, the code correction device 1 of the third embodiment corrects the original code (non-vehicle code) used for programming of the system other than the in-vehicle embedded system.

### <Fourth Embodiment>

The code correction device 1 of a fourth embodiment is configured similarly to the code correction device 1 of the third embodiment described above except for a point described below.

Similarly to the examples shown in FIG. 1 and FIG. 2, the code correction device 1 of the third embodiment is incorporated in the computer (e.g., server computer or the like) other than the computer CT2 (see FIG. 2) used by the user UR (see FIG. 2) of the code correction device 1.

On the other hand, the code correction device 1 of the fourth embodiment is incorporated in the computer (not shown) used by the user of the code correction device 1. Similarly to the code correction device 1 of the third embodiment, the code correction device 1 of the fourth embodiment corrects the original code (non-vehicle code) used for programming of the system other than the in-vehicle embedded system.

Though the embodiments of the code correction device, the code correction method, and the non-transitory recording medium of the present disclosure have been described above with reference to the drawings, the code correction device, the code correction method and the non-transitory recording medium of the present disclosure are not limited to the embodiments described above, and appropriate modifications can be made without departing from the spirit of the present disclosure. The configurations of the examples of the embodiments described above may be appropriately combined. Though the process performed by the code correction device 1 in each of the examples of the embodiments described above has been described as software process performed by executing the program, the process performed by the code correction device 1 may also be the process performed by hardware. Alternatively, the process performed by the code correction device 1 may be the process that combines both software and hardware. Further, the program stored in the memory 12 of the code correction device 1 (program for realizing the functions of the processor 13 of the code correction device 1) may be recorded, provided, distributed, etc., on a computer-readable recording medium (non-transitory recording medium) such as a semiconductor memory, a magnetic recording medium, an optical recording medium, etc.

## Claims

1. A code correction device comprising a processor configured to:
acquire an original code used in programming;
analyze the original code by using a static analysis tool and output a violation report indicating a violation which does not comply with a coding guideline and is included in the original code; and
use a generative AI model, input the original code and the violation report into the generative AI model and cause the generative AI model to generate a corrected code which is a code corrected to comply with the coding guideline.

2. The code correction device according to claim 1, wherein the processor is configured to:
add external information which is required for correcting the original code and is pre-stored in a database, to an input to the generative AI model; and
cause the generative AI model to generate the corrected code by combining a search for the external information, by using a technology of information addition type generation means.

3. The code correction device according to claim 2, wherein the external information includes at least one of the coding guideline used for output of the violation report and a model answer collection of correction examples created by a code corrector.

4. The code correction device according to claim 1, wherein the processor is configured to generate a violation evaluation result based on the violation report, and
the processor is configured to:
analyze the corrected code generated by the generative AI model and output a post-correction violation report indicating a violation which does not comply with the coding guideline and is included in the corrected code;
generate the violation evaluation result based on the violation report and the post-correction violation report; and
input the corrected code and the post-correction violation report into the generative AI model and cause the generative AI model to generate a recorrected code which is a code recorrected to comply with the coding guideline when the violation evaluation result generated based on the violation report and the post-correction violation report is outside an acceptable range.

5. The code correction device according to claim 4, wherein a process performed by the processor is repeated until the violation evaluation result is within the acceptable range.

6. The code correction device according to claim 1, wherein the generative AI model includes a first generative AI model which generates the corrected code by performing violation resolution in only one created file and a second generative AI model which generates the corrected code by performing violation resolution across a plurality of created files, and
the processor is configured to generate the corrected code by using the first generative AI model and the second generative AI model in combination.

7. The code correction device according to claim 1, wherein the processor is configured to classify a violation indicated by the violation report into one of a plurality of types of violation, and
the processor is configured to:
be able to apply different correction approaches depending on the type of violation; and
cause the generative AI model to generate the corrected code by applying a correction approach corresponding to a classified type of violation.

8. The code correction device according to claim 7, wherein, the processor is configured to cause the generative AI model to generate the corrected code by proposing a refactoring when a violation indicated by the violation report is classified as an unused function violation.

9. The code correction device according to claim 7, wherein, the processor is configured to cause the generative AI model to generate the corrected code by proposing an explicit cast when a violation indicated by the violation report is classified as a type conversion violation.

10. The code correction device according to claim 1, wherein, the processor is configured to feed back a result of selection accepted by a user interface to the generative AI model as training data, by using the user interface having a function of displaying the corrected code generated by the generative AI model as a correction proposal and a function of accepting selection of at least one of a plurality of correction proposals.

11. The code correction device according to claim 1, wherein the processor is configured to:
template a pattern of a violation which occurs at a frequency equal to or greater than a threshold value based on the violation report; and
input a generated template into the generative AI model and cause the generative AI model to generate the corrected code.

12. The code correction device according to claim 11, wherein at least one of information about a cause of a violation and information about a method for correcting a violation is included in the template which is generated and input into the generative AI model.

13. The code correction device according to claim 1, wherein the processor is configured to:
input the original code and the corrected code into the generative AI model;
cause the generative AI model to compare the original code with the corrected code; and
cause the generative AI model to output a reason for correction which is a reason why the original code was corrected to the corrected code and a corrected line which is a line in which a correction was made to the original code and is included in the corrected code.

14. The code correction device according to claim 13, wherein, the processor is configured to cause the generative AI model to generate the corrected code including the reason for correction and the corrected line so that the reason for correction is written in the corrected line included in the corrected code when the corrected code generated by the generative AI model is displayed on a user interface.

15. A code correction method comprising:
acquiring an original code used in programming;
analyzing the original code by using a static analysis tool and outputting a violation report indicating a violation which does not comply with a coding guideline and is included in the original code; and
using a generative AI model, inputting the original code and the violation report into the generative AI model and causing the generative AI model to generate a corrected code which is a code corrected to comply with the coding guideline.

16. A non-transitory recording medium having recorded thereon a computer program for causing a processor to perform a process comprising:
acquiring an original code used in programming;
analyzing the original code by using a static analysis tool and outputting a violation report indicating a violation which does not comply with a coding guideline and is included in the original code; and
using a generative AI model, inputting the original code and the violation report into the generative AI model and causing the generative AI model to generate a corrected code which is a code corrected to comply with the coding guideline.
